# DEMANDE DE BREVET EUROPEEN

(11) **EP 4 762 894 A1**
(43) Date de publication de la demande: **24.06.2026**
(21) Numéro de dépôt: 25225229.1
(22) Date de dépôt: 18.12.2025
(51) Int. Cl.: A01B 59/06

(54) **DISPOSITIF DE STABILISATION**

(30) Priorité: 20.12.2024 FR 2415034
(71) Demandeur: Alamo Group Agriculture France, 69250 Neuville-sur-Saône (FR)
(72) Inventeur: SAUBIN, David, 69250 Neuville-sur-Saône (FR); COINDRE, Fabrice, 69250 Neuville-sur-Saône (FR)
(74) Mandataire: Cabinet Netter

(57) **Abrégé**

Dispositif de stabilisation pour un outil (7) porté par un engin agricole, comprenant un châssis mécanosoudé (15, 151) comprenant deux bras avant (23), une poutre centrale (31) arrière s'étendant selon un axe transversal (33), chaque bras avant (23) comprenant deux goussets (391) plats et une âme (41), les goussets (391, 392) présentant chacun une forme de L avec une branche longitudinale (40) et une branche transversale (42), le châssis (15) comprenant une paire de portées arrière (57) de travail aptes à recevoir un outil (7) agricole reliées à la poutre centrale (31) par deux chapes arrière (59), les portées arrières (57) s'étendant selon un même axe transversal (60, 601), une paire de flasques avant (85), fixés sur un bord avant (351) de la poutre centrale (31), une paire de chapes supérieures (91), le dispositif de stabilisation comprenant deux paires de bielles (17) articulées au châssis (15, 151) selon un axe d'articulation (19, 191), l'axe d'articulation (19, 191) et l'axe transversal (60, 601) des portées arrière (57) de travail étant parallèles à l'axe transversal (33) de la poutre centrale (31), l'axe d'articulation (19, 191) et l'axe transversal (60, 601) des portées arrière (57) de travail étant décalés l'un par rapport à l'autre, le dispositif comprenant une paire d'interfaces de relevage (21) aptes à se fixer sur des bras de relevage (5) de tracteur, chaque interface de relevage (21) étant montée respectivement sur les paires de bielles (17).

## Description

L'invention concerne les dispositifs de stabilisation pour outil agricole.

L'invention concerne un dispositif de stabilisation d'engins agricoles conçu pour être monté sur les attelages à trois points de tracteurs. Ce type de système assure une meilleure stabilité des équipements portés, particulièrement sur des terrains accidentés ou lorsque les équipements présentent une masse ou un porte à faux élevé. Les dispositifs de stabilisation d'engins agricoles ont été largement utilisés dans l'agriculture pour garantir que les équipements tels que les charrues, les semoirs ou les pulvérisateurs demeurent bien alignés avec le tracteur et ne se déportent pas latéralement.

Les systèmes d'attelage à trois points sont communs pour attacher des outils portés, offrant à la fois solidité et polyvalence dans l'utilisation d'un large éventail d'outils agricoles. L'attelage à trois points assure le portage d'un outil en porte à faux avant ou arrière.

Dans l'art antérieur, on trouve principalement des systèmes mécaniques qui utilisent des barres de stabilisation ou des chaînes pour limiter les mouvements latéraux des équipements attelés. Ces systèmes permettent une certaine liberté de mouvement tout en limitant les oscillations, mais leur efficacité varie selon les conditions de terrain et la taille de l'équipement transporté.

Cependant, les dispositifs de stabilisation actuels présentent plusieurs inconvénients.

La plupart des dispositifs de stabilisation actuels sont complexes et prennent beaucoup de temps à installer. L'utilisateur doit souvent effectuer de nombreux ajustements manuels, nécessitant parfois des outils spécifiques, ce qui augmente non seulement la durée de mise en place mais également la difficulté de l'installation, en particulier lorsque les engins sont volumineux ou qu'ils doivent être changés fréquemment pour différentes opérations agricoles.

Les barres de stabilisation mécaniques ne sont pas toujours ajustables ou offrent une capacité de réglage limitée. Cela peut entraîner des problèmes lorsque des équipements de différentes tailles ou configurations sont utilisés, nécessitant des ajustements manuels laborieux. De plus, ces systèmes ne compensent pas efficacement les irrégularités du terrain, ce qui peut provoquer des oscillations importantes de l'équipement attelé, compromettant ainsi la sécurité et la précision des travaux agricoles.

Ces dispositifs de stabilisation sont souvent sensibles à l'usure et nécessitent un entretien fréquent, en particulier lorsque des pièces mobiles telles que des chaînes ou des barres sont utilisées pour absorber les chocs ou les mouvements latéraux. Cette usure peut entraîner un relâchement du dispositif, augmentant les risques d'instabilité lors du transport ou de l'utilisation d'équipements lourds sur des terrains accidentés.

Il existe donc un besoin d'améliorer les dispositifs de stabilisation pour les attelages à trois points afin de proposer une solution plus robuste, ajustable, et capable de transmettre au tracteur un couple de basculement latéral de l'outil, tout en réduisant les besoins en maintenance.

L'invention vient améliorer la situation. À cet effet, elle propose un dispositif de stabilisation pour un outil porté par un engin agricole. Ledit dispositif comprenant un châssis mécanosoudé comprenant deux bras avant aptes à se monter sur l'engin agricole. Les bras avant s'étendent parallèlement à un axe longitudinal. Une poutre centrale arrière s'étend selon un axe transversal. Ladite poutre centrale relie rigidement les deux bras avant. Chaque bras avant comprend deux goussets plats, parallèles entre eux, et une âme reliant rigidement les deux goussets. L'âme est rigidement liée à la poutre centrale. L'âme est reçue dans des échancrures des goussets de manière à former une nervure inférieure et une nervure supérieure en saillie par rapport aux goussets et orientées selon l'axe longitudinal. Les échancrures débouchent vers l'arrière des goussets. Les goussets présentent chacun une forme de L avec une branche longitudinale et une branche transversale. La branche longitudinale et l'âme sont rigidement liées et forment une section en I du bras avant. La branche transversale présente un bord arrière fixé à un bord avant de la poutre centrale, et la branche transversale présente un bord d'extrémité venant en regard d'un bord d'extrémité de la branche transversale correspondante du gousset de l'autre bras avant. Lesdites nervures inférieures et nervures supérieures viennent en saillie respectivement sous la poutre centrale et sur la poutre centrale et sont rigidement liées à ladite poutre centrale. Le châssis comprend en outre une paire de portées arrière de travail aptes à recevoir un outil agricole reliées à la poutre centrale par deux chapes arrière. Les portées arrières s'étendent selon un même axe transversal. Le châssis comprend une paire de flasques avant fixés sur un bord avant de la poutre centrale et aptes à recevoir un lien amovible. Le châssis comprend une paire de chapes supérieures fixées sur un bord supérieur de la poutre centrale destinées à fixer le châssis à un attelage de l'engin agricole. Au moins une des chapes supérieures est monobloc avec une des chapes arrière. Le dispositif de stabilisation comprend en outre deux paires de bielles articulées au châssis selon un axe d'articulation. L'axe d'articulation et l'axe transversal des portées arrière de travail sont parallèles à l'axe transversal de la poutre centrale. L'axe d'articulation et l'axe transversal des portées arrière de travail sont décalés l'un par rapport à l'autre. Le dispositif comprend en outre une paire d'interfaces de relevage aptes à se fixer sur des bras de relevage de tracteur. Chaque interface de relevage étant montée respectivement sur les paires de bielles. Ce dispositif est particulièrement avantageux car il permet un montage aisé et une robustesse élevée.

Dans un mode de réalisation, le dispositif comprend une paire d'organes d'accrochage. Chaque organe d'accrochage est fixé à un bras avant respectif et destiné à se fixer à l'engin agricole. Un réglage en longueur est facilité.

Dans un mode de réalisation, le dispositif comprend un jeu de plaques entretoises montées entre les organes d'accrochage et les bras avant. Les plaques entretoises sont destinées à régler l'écartement des organes d'accrochage de manière à s'adapter à différents engins agricoles. Un réglage en largeur est facilité.

Dans un mode de réalisation, chaque organe d'accrochage comprend un crochet. Le montage est rapide.

Dans un mode de réalisation, chaque organe d'accrochage comprend un verrou destiné à verrouiller les bras avant sur l'engin agricole. La stabilité est assurée.

Dans un mode de réalisation, les âmes, les goussets, les chapes et les flasques avant sont fixés par soudure et dans lequel les portées arrière et les interfaces de relevage, et le cas échéant, les organes d'accrochage sont boulonnés. La construction est rigide.

Dans un mode de réalisation, les chapes arrière comprennent deux flancs de tôle et dans lequel chaque chape supérieure est en partie réalisée avec un des flancs de tôle des chapes arrière. La transmission des efforts est optimisée.

D'autres caractéristiques et avantages de l'invention apparaîtront mieux à la lecture de la description qui suit, tirée d'exemples donnés à titre illustratif et non limitatif, tirés des dessins sur lesquels :
- [Fig.1] illustre en vue de perspective un dispositif de stabilisation selon l'invention monté sur un attelage de tracteur ;
- [Fig.2] illustre en vue de perspective un châssis du dispositif de stabilisation de la [Fig.1] ;
- [Fig.3] illustre en vue de perspective éclatée le dispositif de stabilisation de la [Fig.1] ;
- [Fig.4] illustre en vue de perspective un dispositif de stabilisation selon un autre mode de réalisation ;
- [Fig.5] illustre en vue de perspective le châssis du dispositif de stabilisation de la [Fig.4].

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

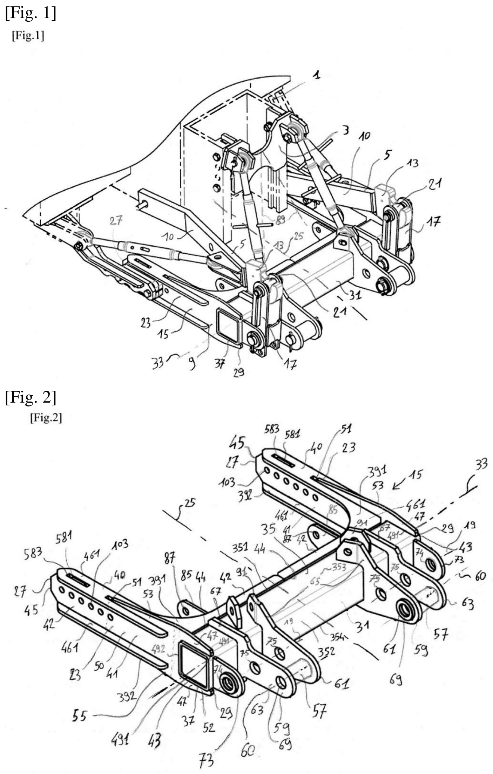

Un tracteur 1 ou machine agricole, comprend un attelage trois points 3 disposé en partie arrière du tracteur 1, cf. [Fig.1]. En variante ou en complément, l'attelage 3 est disposé à l'avant d'un tracteur. L'attelage 3 comprend une paire de bras de relevage 5 destinés à supporter un outil 7 par l'intermédiaire d'un dispositif de stabilisation 9 et un bras supérieur non représenté. L'outil 7 peut être agricole ou destiné à l'entretien routier.

Chaque bras de relevage 5 comprend un bras 10 et un crochet 13 monté à l'extrémité arrière du bras 10. Les bras de relevage 5 sont mobiles entre une position basse et une position haute sous l'effet d'un actionneur non représenté. Les crochets 13 sont montés en saillie par rapport au tracteur 1.

L'attelage 3 comprend en outre une paire d'articulations disposées en partie avant de l'attelage 3, au voisinage de fusées de tracteur 1. Les termes avant et arrière sont utilisés en relation aux directions avant et arrière du tracteur.

Le dispositif de stabilisation 9 peut être monté sur l'attelage 3. Le dispositif de stabilisation 9 est destiné à supporter l'outil 7 et assurer sa stabilisation lors de son utilisation.

Le dispositif de stabilisation 9 comprend un châssis mécanosoudé 15 et une paire de bielles 17 articulées au châssis 15 selon un axe d'articulation 19. Chaque bielle 17 supporte une interface de relevage 21 destinée à être reçue par un des bras de relevage 5 de l'attelage 3. L'interface de relevage 21 peut comprendre un goujon monté dans la bielle 17 et une rotule montée autour du goujon dans le mode de réalisation représenté.

Comme illustré en [Fig.2], le châssis 15 comprend deux bras avant 23 aptes à se monter sur les articulations de l'attelage 3. Les deux bras avant 23 s'étendent parallèlement à un axe longitudinal 25. Chaque bras avant 23 comprend une extrémité avant 27 et une extrémité arrière 29.

Le châssis 15 comprend une poutre centrale 31 s'étendant selon un axe transversal 33, ici perpendiculaire à l'axe longitudinal 25. La poutre centrale 31 relie rigidement les deux bras avant 23 au voisinage de l'extrémité arrière 29 respective de chaque bras avant 23. Le châssis 15 présente une forme générale de U.

Ici, la poutre centrale 31 est formé par un tronçon de tube carré 35 présentant deux extrémités 37. Le tronçon de tube carré 35 comprend un bord avant 351, un bord arrière 352, un bord supérieur 353 et un bord inférieur 354.

Le châssis 15 présente ici un plan de symétrie longitudinal vertical parallèle aux bras avant 23.

Chaque bras avant 23 comprend un gousset supérieur 391 et un gousset inférieur 392, parallèles entre eux. Chaque gousset est plat. Chaque bras avant 23 comprend une âme 41 reliant rigidement le gousset supérieur 391 et le gousset inférieur 392.

Chaque gousset 391, 392 présente une forme de L avec une branche longitudinale 40 et une branche transversale 42. La branche transversale 42 présente un bord arrière 44 fixé à la poutre centrale 31, par exemple sur le bord avant 351 du tronçon de tube carré 35. Les branches longitudinales 40 sont en contact avec l'âme 41 pour former une section en I du bras avant 23. Chaque gousset 391, 392 comprend une face supérieure 461 et une face inférieure 462.

La branche transversale 42 présente un bord d'extrémité 56 à l'opposé de la branche longitudinale 40. Le bord d'extrémité 56 de la branche transversale 42 se trouve en regard de bord d'extrémité 56 de la branche transversale 42 correspondante du gousset 391, 392 de l'autre bras avant 23.

Les deux goussets supérieurs 391 sont fixés à la poutre centrale 31 sur le bord avant 351 du tronçon de tube carré 35. Les faces supérieures 461 des deux goussets supérieurs 391 sont ici tangentes au bord supérieur 353 du tronçon de tube carré 35. Les deux goussets inférieurs 392 sont fixés à la poutre centrale 31 sur le bord avant 351 du tronçon de tube carré 35. Les faces inférieures 462 des deux goussets inférieurs 392 sont ici tangentes au bord inférieur 354 du tronçon de tube carré 35.

Chaque gousset 391, 392 présente une échancrure 51 destinée à recevoir l'âme 41. Chaque échancrure 51 débouche vers l'arrière de chaque gousset 391, 392. Chaque échancrure 51 présente une forme rectangulaire adaptée à l'épaisseur de l'âme 41. Dans le mode de réalisation représenté ici, une soudure est formée de chaque côté de l'échancrure 51, sur la face supérieure 461 et sur la face inférieure 462.

Chaque âme 41 est réalisée à partir d'un flanc de tôle épaisse. L'épaisseur de l'âme 41 est dirigée selon l'axe transversal 33. Chaque âme 41 comprend une portion avant 48, une portion intermédiaire 50 et une portion arrière 52 monoblocs. La portion avant 48 présente des côtés supérieur et inférieur parallèles. La portion intermédiaire 50 présente des côtés supérieur et inférieur s'élargissant depuis la portion avant 48 jusqu'à la portion arrière 52. La portion arrière 52 peut présenter des côtés supérieur et inférieur se rétrécissant vers l'arrière.

Chaque âme 41 présente une forme générale de fourche. Ici, chaque portion arrière 52 comprend une mâchoire 47 à deux branches ouvertes au voisinage de son extrémité arrière 43. Ici, la mâchoire 47 comprend deux côtés parallèles 491 et un fond 492 perpendiculaire aux côtés parallèles 491 reliant les côtés parallèles 491.

Chaque âme 41 est reliée rigidement à la poutre centrale 31 au voisinage d'une extrémité 37 respective du tronçon de tube carré 35. Chaque fourche 47 est conformée avec la poutre centrale 31. Les côtés parallèles 491 sont en contact avec le bord supérieur 353 et le bord inférieur 354 du tube carré 35. Les côtés parallèles 491 sont fixés au bord supérieur 353 et au bord inférieur 354 du tube carré 35 par exemple par soudure. Le fond 492 est en contact avec le bord avant 351 du tube carré 35. Le fond 492 est fixé au bord avant 351 du tube carré 35 par exemple par soudure. Ici, la longueur des côtés parallèles 491 est sensiblement égale à la dimension du tube carré selon l'axe longitudinal.

Les goussets 391, 392 reposent en partie sur les portions avant 48 des âmes 41 respectives. Ici, une soudure peut fixer rigidement les goussets 391, 392 à l'âme 41. Chaque âme 41 est reçue dans les échancrures 51 des goussets 391, 392 respectifs. Plus particulièrement, les portions intermédiaires 50 de chaque âme 41 sont reçues dans les échancrures 51 des goussets 391, 392 respectifs. Chaque portion intermédiaire 50 et chaque portion arrière 52 sont en partie en saillie par rapport aux goussets 391, 392 de manière à former une nervure supérieure 53 et une nervure inférieure 55. Les nervures supérieures 53 et les nervures inférieures 55 sont orientées selon l'axe longitudinal 33. Les nervures supérieures 53 et les nervures inférieures 55 viennent en saillie respectivement sous la poutre centrale 31 et sur la poutre centrale 31. Les nervures supérieures 53 et nervures inférieures 55 sont rigidement liées à la poutre centrale 31, ici au tronçon de tube carré 35, par exemple par soudure. Les nervures supérieures 53 et nervures inférieures 55 peuvent former une partie de la mâchoire 47.

La portion avant 48 de l'âme 41 peut comprendre une protubérance supérieure 581 et une protubérance inférieure dans l'alignement des nervures supérieure et inférieure 53, 55, avec solution de continuité. Chaque gousset 391, 392 peut présenter une lumière 583, ici rectangulaire, apte à recevoir la protubérance respective de l'âme 41. Une soudure peut être effectuée entre la protubérance respective et le gousset dans la lumière 583.

Le châssis 15 comprend deux chapes arrière 59. Les deux chapes arrière 59 sont fixées rigidement à la poutre centrale 31, ici sur le tronçon de tube carré 35, par exemple par soudure. Chaque chape arrière 59 comprend une plaque interne 61, en regard de l'autre chape arrière 59 selon la direction de l'axe transversal 33. Chaque chape arrière 59 comprend une plaque externe 63, à l'opposé de l'autre chape selon la direction de l'axe transversal 33.

Chaque plaque interne 61 comprend une portion avant 65 en forme de mâchoire conformée avec la poutre centrale 31, ici avec le tronçon de tube carré 35. La portion avant 65 s'emboîte autour de la poutre centrale 31. La portion avant 65 est fixée rigidement à la poutre centrale 31, par exemple par soudure. La fixation est réalisée sur trois côtés de la poutre centrale 31.

Chaque plaque externe 63 comprend une portion avant 67 en forme de fourche conformée avec la poutre centrale 31, ici avec le tronçon de tube carré 35. La portion avant 67 s'imbrique autour de la poutre centrale 31. La portion avant 67 est fixée rigidement à la poutre centrale 31, par exemple par soudure. La fixation est réalisée sur trois côtés de la poutre centrale 31.

Les plaques internes 61 et les plaques externes 63 présentent chacune un perçage principal 69. Les perçages principaux 69 des plaques internes 61 et des plaques externes 63 sont coaxiaux entre eux.

Le châssis 15 comprend en outre une paire de portées arrière 57 de travail destinées à recevoir l'outil 7. Les portées arrière 57 s'étendent selon un axe transversal 60 et sont coaxiales entre elles. Les portées arrière 57 de travail sont parallèles à l'axe transversal 33. Les portées arrière 57 sont ici décalées vers l'arrière par rapport à l'axe transversal 33. L'axe transversal 60 est décalé vers l'arrière par rapport à l'axe d'articulation 19 de manière à dégager les portées arrière 57 de travail pour faciliter le montage de l'outil 7. Les portées arrière 57 de travail se trouvent déportées des bielles 17. Ici, l'axe d'articulation 19 se situe entre la poutre centrale 31 et l'axe transversal 60 des portées arrière 57.

Les portées arrière 57 comprennent un arbre 571 et optionnellement un fourreau 572 présentant une surface active cylindrique de diamètre supérieur au diamètre de l'arbre 571. Le fourreau 572 présente un diamètre intérieur correspondant au diamètre de l'arbre 571. Le diamètre de la surface active cylindrique peut être choisi en fonction de l'outil 7 porté par le dispositif de stabilisation 9.

En variante, les portées arrière peuvent présenter une forme d'arbre épaulé comprenant une surface active cylindrique entourée de deux cylindres d'extrémité. Les cylindres d'extrémités présentent un diamètre inférieur à celui de la surface active cylindrique.

L'arbre 571 de chaque portée arrière 57 est reçu dans les perçages principaux 69 des plaques internes 61 et des plaques externes 63 de la chape arrière 59 respective. Les perçages principaux 69 présentent un diamètre analogue à celui de l'arbre 571.

Le châssis 15 peut comprendre des organes de maintien des portées arrière 57 dans les chapes arrière 59. Ici, des goupilles 71 sont utilisées. Les goupilles 71 traversent l'arbre 571 de chaque côté de la chape arrière 59 correspondante. En variante, les organes de maintien sont des circlips ou des écrous.

Le châssis 15 comprend en outre une paire de plaques supplémentaires 73 fixées rigidement à l'arrière de la poutre centrale 31 au voisinage des extrémités 37 du tronçon de tube carré 35, par exemple par soudure. Les plaques supplémentaires 73 sont parallèles. Les plaques supplémentaires 73 s'étendent vers l'arrière à partir de la poutre centrale 31. En variante, les plaques supplémentaires sont monoblocs avec l'âme 41.

Ici, un perçage 74 est ménagé dans chaque plaque supplémentaire 73. Un perçage secondaire 75 est ménagé dans chaque plaque interne 61 et plaque externe 63. Les perçages secondaires 75 sont ménagés entre les perçages principaux 69 et la poutre centrale 31.

Le perçage secondaire 75 de chaque plaque externe 63 et le perçage 74 de chaque plaque supplémentaire 73 sont destinés à recevoir une pièce d'articulation 77 des bielles 17 supportant les interfaces de relevage 21. Ici, la pièce d'articulation 77 comprend un goujon monté entre une plaque supplémentaire 73 et une plaque externe 63 à travers le perçage secondaire 75 de ladite plaque externe 63 et le perçage 74 de la plaque supplémentaire 73.

Les perçages 74 des plaques supplémentaires 73 et les perçages secondaires 75 des plaques internes 61 et des plaques externes 63 sont coaxiaux.

Les plaques externes 63 sont montées entre les plaques internes 61 et les plaques supplémentaires 73. Avec les plaques supplémentaires 73, les plaques externes 63 forment fonctionnellement des chapes pour les pièces d'articulation 77.

Les bielles 17 comprennent ici deux plaques de support 79. Chaque plaque de support 79 présente une forme allongée. Les deux plaques de support 79 sont montées parallèles entre elles. Les plaques de support 79 sont reliées par une entretoise. La bielle 17 peut être fabriquée par découpe et pliage de tôle.

Ici, un perçage inférieur 81 et un perçage supérieur 83 sont ménagés dans chaque plaque de support 79. Les perçages inférieurs 81 reçoivent la pièce d'articulation 77. Chaque perçage supérieur 83 reçoit une des interfaces de relevage 21, notamment un des goujons.

Les plaques de support 79 sont montées libres en rotation autour de la pièce d'articulation 77 selon un axe transversal. Par l'intermédiaire des bielles 17, les interfaces de relevage 21 sont articulées au châssis 15 permettant le relevage du dispositif de stabilisation 9

Les interfaces de relevage 21 sont parallèles à l'axe transversal 33. Les interfaces de relevage 21 sont coaxiales entre elles.

Le châssis 15 comprend en outre une paire de flasques avant 85. Un perçage d'accrochage 87 est ménagé dans chaque flasque avant 85. Les deux flasques avant 85 sont fixés rigidement à la poutre centrale 31, notamment sur le bord avant 351 du tronçon de tube carré 35, ici par soudure. Les perçages d'accrochage 87 sont coaxiaux selon un axe de basculement 88 autour duquel le châssis 15 bascule lors du montage.

En variante, les flasques avant 85 sont chacun fixés à un bras avant 23 respectif.

Les flasques avant 85 sont destinés à recevoir un lien souple 89 pour permettre le montage et le démontage du dispositif de stabilisation 9 sur le tracteur 1. Le lien souple 89 s'accroche dans les perçages d'accrochage 87. Le lien souple 89 est accroché sur un point fixe du tracteur 1, notamment de l'attelage 3. Le lien souple 89 est ici une chaîne. Le lien souple 89 peut être une corde, une sangle, un câble, ...

Dans le mode de réalisation représenté, le châssis 15 comprend une paire de chapes supérieures 91 fixées rigidement sur le bord supérieur 353 du tronçon de tube 35. Une partie au moins de chacune des chapes supérieures 91 est monobloc avec les chapes arrière 59, ici avec les plaques internes 61. Les chapes supérieures 91 sont destinées à se fixer à des tirants 93 de l'attelage 3. Les tirants 93 permettent de maintenir le dispositif de stabilisation 9 à une hauteur de travail qui dépend de chaque outil 7 en soulageant le système hydraulique du tracteur. Les tirants 93 peuvent être réglables en longueur.

Ici, les chapes supérieures 91 présentent chacune un plan médian. Les plans médians des chapes supérieures 91 sont sécants entre eux vers l'avant sur le plan de symétrie du châssis 15.

Le dispositif de stabilisation 9 peut comprendre des organes d'accrochage 95 destinés à fixer le châssis 15 à l'attelage 3 et plus particulièrement aux articulations de l'attelage 3.

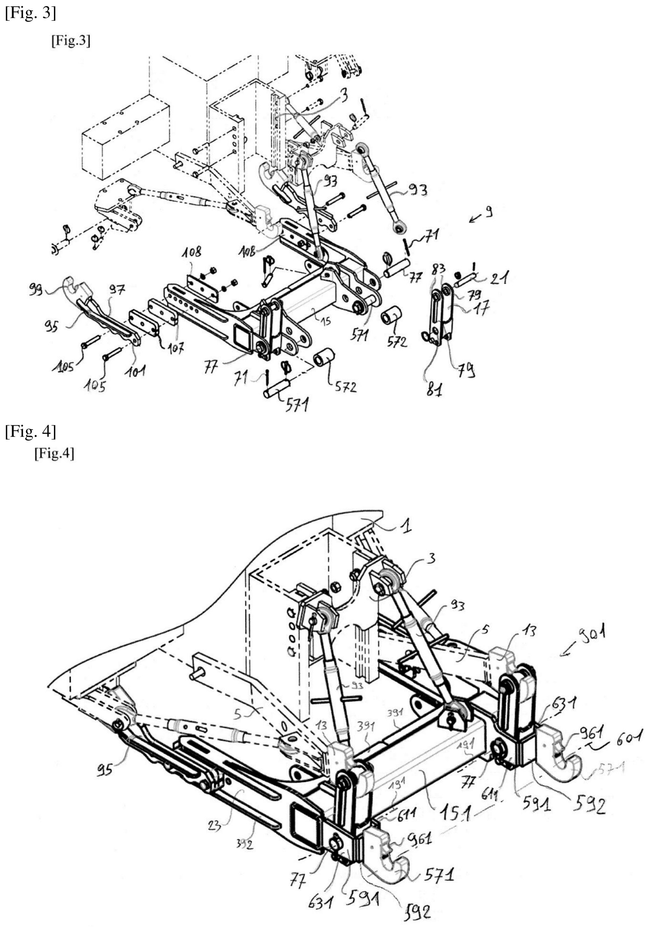

Ici, les organes d'accrochage 95 comprennent chacun une barre de fixation 97 prolongée par un crochet 99, cf. [Fig.3]. La barre de fixation 97 comprend ici une plaque, en général verticale. Une pluralité de perçages 101 d'axes sensiblement horizontaux sont ménagés dans ladite plaque. Des perçages 103 peuvent être ménagés dans la portion avant 48 de l'âme 41 de manière analogue aux perçages 101 de la barre de fixation 97. Les perçages 101 de la barre de fixation 97 sont disposés en regard des perçages 103 de la portion avant 48 de l'âme 41. Des boulons 105 sont disposés dans les perçages 101 de la barre de fixation 97 et dans les perçages 103 de la portion avant 48 de l'âme 41 de manière à fixer rigidement les organes d'accrochage 95 au châssis 15. Ici, la barre de fixation 97 comprend en outre une nervure de rigidification conférant à la barre de fixation 97 une section en T ou en L. Les crochets 99 comprennent un verrou 96 pour verrouillage sur les articulations de l'attelage 3.

Le dispositif de stabilisation 9 peut comprendre des plaques de fixation 108 disposées à l'opposé de l'âme 41 par rapport aux organes d'accrochage 95. Les plaques de fixation 108 présentant des perçages analogues aux perçages 101 des barres de fixation 97 de manière à recevoir les boulons 105. En variante, les plaques de fixations 108 présentent des trous taraudés. Les boulons sont alors remplacés par des vis.

Le dispositif de stabilisation 9 peut comprendre un jeu de plaques entretoises 107 disposées entre les barres de fixation 97 et le châssis 15. Les plaques entretoises 107 permettent de régler l'écartement des organes d'accrochage 97 de manière à s'adapter à différents attelages 3.

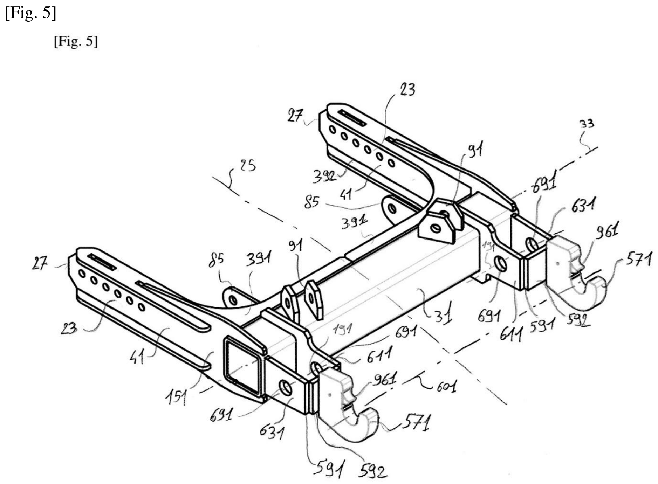

Dans un autre mode de réalisation, illustré aux figures 4 et 5, un dispositif de stabilisation 901 comprend un châssis 151 est dépourvu de portée arrière. Le dispositif de stabilisation 901 comprend une paire de bielles 17 articulées au châssis 151 selon un axe d'articulation 191. Le châssis 151 comprend une paire de chapes arrière 591. Chaque chape arrière 591 comprend une plaque interne 611 et une plaque externe 631. Des perçages d'articulation 691 sont ménagés dans les plaques internes 611 et les plaques externes 631. Les perçages d'articulation 691 sont alignés selon l'axe d'articulation 191. Les perçages d'articulation 691 sont destinés à recevoir des pièces d'articulation 77 décrites précédemment. Les plaques internes 611 et les plaques externes 631 de chaque chape arrière 591 sont reliées rigidement entre elles par une plaque de support 592. Les plaques internes 611 et les plaques externes 631 de chaque chape arrière 591 sont ici fixées à la plaque de support 592 par soudure. Le châssis 151 comprend une paire de crochets de travail 571 fixés rigidement aux plaques de support 592, ici par soudure. Les crochets de travail 571 sont ouverts vers le haut. Les deux crochets de travail 571 sont alignés selon un axe transversal 601. L'axe transversal 601 est décalé vers l'arrière par rapport à l'axe d'articulation 191 de manière à dégager les deux crochets de travail 571 pour faciliter le montage de l'outil 7. Les crochets de travail 571 se trouvent déportés des bielles 17. Ici, l'axe d'articulation 191 se situe entre la poutre centrale 31 et l'axe transversal 601 des crochets de travail 571.

Les crochets de travail 571 sont destinés à recevoir l'outil 7, notamment par l'intermédiaire de rotules. Les crochets de travail 571 peuvent chacun comprendre un verrou 961 apte à verrouiller l'outil 7 sur le dispositif de stabilisation 9. Le châssis 151 est adapté à d'autres types d'engins agricoles que le châssis 15 décrit précédemment.

### Procédé de montage

Le procédé de montage du dispositif de stabilisation 9 sur l'attelage 3 comprend les étapes suivantes :
- poser le dispositif de stabilisation sur le sol, les bras avant 23 orientés vers le tracteur 1 ;
- attraper les interfaces de relevage 21 à l'aide des bras de relevage 5 en reculant le tracteur 1 puis en levant les bras de relevage 5 ;
- soulever le dispositif de stabilisation 9 en continuant de lever les bras de relevage 5 ;
   - éventuellement verrouiller les bras de relevage 5 sur les interfaces de relevage 21 ;
- accrocher les liens souples 89 entre les flasques avant 85 et l'attelage 3 ;
- descendre les bras de relevage 5, permettant au dispositif de stabilisation 9 de basculer autour de l'axe de basculement 88 soulevant ainsi les extrémités avant 27 des bras avant 23 de manière que les organes d'accrochage 95 s'accrochent sur les articulations de l'attelage 3 ;
- verrouiller les organes d'accrochage 95 sur les articulations de l'attelage 3 ;
- lever les bras de relevage 5 de manière à détendre les liens souples 89 ;
- retirer les liens souples 89 ;
- atteler l'outil 7 sur les portées arrière 57 du dispositif de stabilisation 9 ;
- mettre le dispositif de stabilisation 9 à une hauteur de travail ;
- fixer les tirants 93 aux chapes supérieures 91 et à l'attelage 3, éventuellement ajuster la longueur des tirants 93.

### Procédé de démontage

Pour effectuer le démontage du dispositif de stabilisation 9, les opérations inverses au montage sont effectuées. Le démontage est effectué par les opérations suivantes :
- décrocher les tirants 93 entre les chapes supérieures 91 et l'attelage 3 ;
- descendre le dispositif de stabilisation 9 ;
- décrocher l'outil 7 des portées arrière 57 du dispositif de stabilisation 9 ;
- soulever le dispositif de stabilisation 9 ;
- accrocher les liens souples 89 aux flasques avant 85 et à l'attelage 3 ;
- descendre les bras de relevage 5 de manière à tendre les liens souples 89 ;
- déverrouiller les organes d'accrochage 95 des articulations de l'attelage 3 ;
- monter les bras de relevage 5, de manière à faire basculer le dispositif de stabilisation 9 autour de l'axe de basculement 88, descendant ainsi les extrémités avant 27 des bras avant 23 de manière que les organes d'accrochage 95 se décrochent des articulations de l'attelage 3 ;
- éventuellement déverrouiller les bras de relevage 5 sur interfaces de relevage 21 ;
- descendre le dispositif de stabilisation 9 en descendant les bras de relevage 5 jusqu'au sol ;
- désolidariser les bras de relevage 5 des interfaces de relevage 21 ;
- avancer le tracteur 1.

On a décrit un dispositif de stabilisation d'outil agricole comprenant des portées de travail chacune formée par une surface cylindrique. Cependant l'invention n'est pas limitée à cette forme. Les portées peuvent être formées par des crochets, des rotules ou par une autre surface usuellement utilisée pour recevoir des outils agricoles.

En d'autres termes, un dispositif de stabilisation d'outil agricole pour tracteur comprend un châssis et des bielles montées à rotation sur le châssis. Le châssis comprend deux bras reliés entre eux par une poutre. Le châssis comprend des portées permettant de supporter un outil agricole, notamment un outil dont le centre de gravité peut être en porte à faux latéral. Le châssis comprend des pièces de rigidification, notamment des goussets reliant les bras à la poutre. Les bielles sont agencées pour être attrapées et soulevées par des bras de relevage du tracteur. Le châssis comprend en outre des œillets de fixation permettant d'attacher le dispositif de stabilisation à des liens souples. Les liens souples sont reliés au tracteur. La position des œillets permet au dispositif de basculer sans effort de la part de l'utilisateur lorsque les bras de levage soulèvent le dispositif.

## Revendications

1. Dispositif de stabilisation pour un outil (7) porté par un engin agricole, ledit dispositif comprenant un châssis mécanosoudé (15, 151) comprenant deux bras avant (23) aptes à se monter sur l'engin agricole, les bras avant (23) s'étendant parallèlement à un axe longitudinal (25), une poutre centrale (31) arrière s'étendant selon un axe transversal (33), ladite poutre centrale (31) reliant rigidement les deux bras avant (23), chaque bras avant (23) comprenant deux goussets (391, 392) plats, parallèles entre eux, et une âme (41) reliant rigidement les deux goussets (391, 392), l'âme (41) étant rigidement liée à la poutre centrale (31), l'âme (41) étant reçue dans des échancrures (51) des goussets (391, 392) de manière à former une nervure inférieure (55) et une nervure supérieure (53) en saillie par rapport aux goussets (391, 392) et orientées selon l'axe longitudinal (25), les échancrures (51) débouchant vers l'arrière des goussets (391, 392), les goussets (391, 392) présentant chacun une forme de L avec une branche longitudinale (40) et une branche transversale (42), la branche longitudinale (40) et l'âme (41) étant rigidement liées et formant une section en I du bras avant (23), la branche transversale (42) présentant un bord arrière (352) fixé à un bord avant (351) de la poutre centrale (31), et la branche transversale (42) présentant un bord d'extrémité (56) venant en regard d'un bord d'extrémité (56) de la branche transversale (42) correspondante du gousset de l'autre bras avant (23), lesdites nervures inférieures (55) et nervures supérieures (53) venant en saillie respectivement sous la poutre centrale (31) et sur la poutre centrale (31) et étant rigidement liées à ladite poutre centrale (31), le châssis (15) comprenant en outre une paire de portées arrière (57) de travail aptes à recevoir un outil (7) agricole reliées à la poutre centrale (31) par deux chapes arrière (59), les portées arrières (57) s'étendant selon un même axe transversal (60, 601), une paire de flasques avant (85) fixés sur un bord avant (351) de la poutre centrale (31) et aptes à recevoir un lien (89) amovible, une paire de chapes supérieures (91) fixées sur un bord supérieur (353) de la poutre centrale (31) destinées à fixer le châssis (15, 151) à un attelage (3) de l'engin agricole, au moins une des chapes supérieures (91) étant monobloc avec une des chapes arrière (59), le dispositif de stabilisation comprenant, en outre, deux paires de bielles (17) articulées au châssis (15, 151) selon un axe d'articulation (19, 191), l'axe d'articulation (19, 191) et l'axe transversal (60, 601) des portées arrière (57) de travail étant parallèles à l'axe transversal (33) de la poutre centrale (31), l'axe d'articulation (19, 191) et l'axe transversal (60, 601) des portées arrière (57) de travail étant décalés l'un par rapport à l'autre, le dispositif comprenant en outre une paire d'interfaces de relevage (21) aptes à se fixer sur des bras de relevage (5) de tracteur, chaque interface de relevage (21) étant montée respectivement sur les paires de bielles (17).

2. Dispositif de stabilisation selon la revendication 1, comprenant une paire d'organes d'accrochage (95), chaque organe d'accrochage (95) étant fixé à un bras avant (23) respectif et destiné à se fixer à l'engin agricole.

3. Dispositif de stabilisation selon la revendication 2, comprenant un jeu de plaques entretoises (107) montées entre les organes d'accrochage (95) et les bras avant (23), les plaques entretoises (107) étant destinées à régler l'écartement des organes d'accrochage (95) de manière à s'adapter à différents engins agricoles.

4. Dispositif de stabilisation selon la revendication 2 ou 3, dans lequel chaque organe d'accrochage (95) comprend un crochet (99).

5. Dispositif de stabilisation selon l'une des revendications 2 à 4, dans lequel chaque organe d'accrochage (95) comprend un verrou (96) destiné à verrouiller les bras avant (23) sur l'engin agricole.

6. Dispositif de stabilisation selon l'une des revendications précédentes, dans lequel les âmes (41), les goussets (391, 392), les chapes (59, 91) et les flasques avant (85) sont fixés par soudure et dans lequel les portées arrière (57) et les interfaces de relevage (21), et le cas échéant, les organes d'accrochage (95) sont boulonnés.

7. Dispositif de stabilisation selon l'une des revendications précédentes, dans lequel les chapes arrière (59) comprennent deux flancs de tôle et dans lequel chaque chape supérieure (91) est en partie réalisée avec un des flancs de tôle des chapes arrière (59).
